# EUROPÄISCHE PATENTSCHRIFT

(11) **EP 0 610 560 B1**
(45) Veröffentlichungstag und Bekanntmachung des Hinweises auf die Patenterteilung: **21.05.1997**
(21) Anmeldenummer: 93118998.9
(22) Anmeldetag: 25.11.1993
(51) Int. Cl.: A21C 15/00, A21C 9/04

(54) **Vorrichtung zum Behandeln von Gebäckstücken**
Device for treating dough pieces
Appareil pour la manutention des morceaux de pâte

(30) Priorität: 26.11.1992 DE 4239682
(43) Veröffentlichungstag der Anmeldung: 17.08.1994
(73) Patentinhaber: Feldpausch Backtechnik GmbH, D-58849 Herscheid (DE)
(72) Erfinder: Weidlich, Roland Guido, D-58511 Lüdenscheid (DE)
(74) Vertreter: Zinngrebe, Horst, Dr.rer.nat.

(56) Entgegenhaltungen:
- DE-A- 2 160 067
- US-A- 3 648 596
- US-A- 5 078 090

## Beschreibung

Die Erfindung betrifft eine Vorrichtung zum Behandeln von insbesondere balligen Gebäckstücken mit einer Fördereinrichtung für die Gebäckstücke.

Berliner Ballen oder dergleichen Gebäckstücke werden üblicherweise bezuckert zum Verzehr angeboten. Das Bezuckern erfolgt gewöhnlich von Hand, was sehr aufwendig ist. Eine mechanische Bezuckerung von Gebäck ist in DE-A-2 160 067 beschrieben, wobei ein an einem Ende eine Aufnahmestelle und am anderen Ende eine Abgabestelle für das Gebäck bildendes Transportband und eine am Anfang des Transportbandes befindliche, die Oberseite und die Seite des Gebäcks fortlaufend im Übermaß mit Zucker bedeckende Zuckerauslaßvorrichtung vorgesehen sind.

Der Erfindung liegt daher die Aufgabe zugrunde, eine Vorrichtung zu schaffen, mit der das Bezuckern automatisch und ohne Verlust des überschüssigen Zuckers durchgeführt werden kann.

Bei einer Vorrichtung zum Behandeln von insbesondere balligen Gebäckstücken mit einer ersten Fördereinrichtung für die Gebäckstücke sowie mit einer zweiten Fördereinrichtung für Zucker, welche zweite Fördereinrichtung eine unterhalb der ersten Fördereinrichtung angeordnete Wanne aufweist und sich von der Wanne aufsteigend über die erste Fördereinrichtung erstreckt, ist dazu erfindungsgemäß vorgesehen, daß die zweite Fördereinrichtung eine aus der Wanne aufsteigende Schwingrampe aufweist.

Damit können die Gebäckstücke von oben bezuckert werden, wobei überschüssiger Zucker von der Wanne aufgefangen und der zweiten Fördereinrichtung wieder zugeführt werden kann.

In bevorzugter Ausführungsform der Erfindung weist die erste Fördereinrichtung einen langgestreckten Kanal auf, dessen Boden längs des sich über der Wanne erstreckenden Kanalabschnitts wenigstens teilweise als Sieb ausgebildet ist. Es hat sich besonders bewährt, wenn der Kanal mit einem ersten Schwingantrieb gekoppelt ist, der dem Kanal eine lineare Bewegung erteilt.

Besonders bevorzugt ist eine Ausgestaltung der zweiten Fördereinrichtung als eine aus der Wanne aufsteigende Rampe, die über der ersten Fördereinrichtung endet. Zweckmäßig ist die Wanne mit einem zweiten Schwingantrieb gekoppelt und die Rampe mit der Wanne fest verbunden. Besonders bewährt hat sich eine Ausführungsform der Erfindung, gemäß welcher die Wanne einen runden Querschnitt hat, die Rampe an der Außenwand der Wanne ausgebildet ist und der zweite Schwingantrieb der Wanne eine etwa in ihre Umfangsrichtung gerichtete Bewegung erteilt. Eine besonders kompakte Bauform ergibt sich, wenn der Kanal die Seitenwand der Wanne durchdringt. Ferner dient diesem Ziel eine Ausführungsform der Erfindung, bei der der erste und der zweite Schwingantrieb auf einem gemeinsamen Gestell befestigt sind. Die Schwingantriebe können vorteilhafter Weise elektromagnetisch arbeiten und jeweils einzelne Schwingsegmente aufweisen.

Die Erfindung wird nachstehend anhand des in der beigefügten Zeichnung dargestellten Ausführungsbeispiels im einzelnen beschrieben. Es zeigen:
- Fig. 1:: eine schematische Seitenansicht von Teilen einer mit den Merkmalen der Erfindung ausgerüsteten Bezuckerungsvorrichtung, wobei zur besseren Übersichtlichkeit nur die linearen Schwingsegmente angegeben sind;
- Fig. 2:: eine teilweise geschnittene Ansicht der Vorrichtung nach Fig. 1 in Längsrichtung des Kanals mit der Wanne und dem zugehörigen Schwingantrieb; und
- Fig. 3:: eine schematische Draufsicht auf die Wanne und den Kanal ohne Untergestell.

Die im Ganzen mit 1 bezeichnete Vorrichtung zum Bezuckern von nicht dargestellten Gebäckstücken ruht auf einem Gestell, von dem nur das massive obere Rahmenteil 10 schematisch dargestellt ist. Das Rahmenteil 10 ist mit den übrigen Gestellteilen verbunden, die im einzelnen nicht dargestellt sind und an den mit den Vertikallinien angedeuteten Stellen entweder auf dem Boden 16 verankert sind oder auf dem Boden 16 frei stehen. An dem oberen Rahmenteil 10 sind zwei gegenüberliegende massive Ausleger 20, 22 befestigt, von denen jeder auf seinem freien Ende ein elektromagnetisches Schwingsegment 30, 40 trägt. Das Schwingsegment 30 weist einen Elektromagneten 32 auf, der über einen Gummipuffer 34 auf dem Ausleger 20 befestigt ist. An dem beweglichen Anker 36 ist ein Federpaket 38 befestigt, welches seinerseits an einer Muffe 52 verankert ist, welche an der Unterseite eines Kanals 50 sitzt. Im übrigen ist das Schwingsegment so ausgeführt, wie das beispielsweise in der deutschen Patentschrift 28 06 331 im einzelnen erläutert ist.

Das Schwingsegment 40 ist in gleicher Weise wie das Schwingsegment 30 aufgebaut, wobei das Federpaket des Schwingsegments 40 den gleichen Winkel zur Längsrichtung des Kanals 50 einschließt wie das Federpaket 38. Beide Schwingsegmente 30 und 40 werden synchron von einer nicht dargestellten und beispielsweise im Gestell untergebrachten Steuereinrichtung mit dem erforderlichen Strom versorgt, so daß beide Schwingsegmente 30, 40 einen elektromagnetischen Schwingantrieb für den Kanal 50 bilden und diesem eine hin- und hergehende lineare Bewegung in Längsrichtung des Kanals 50 erteilen.

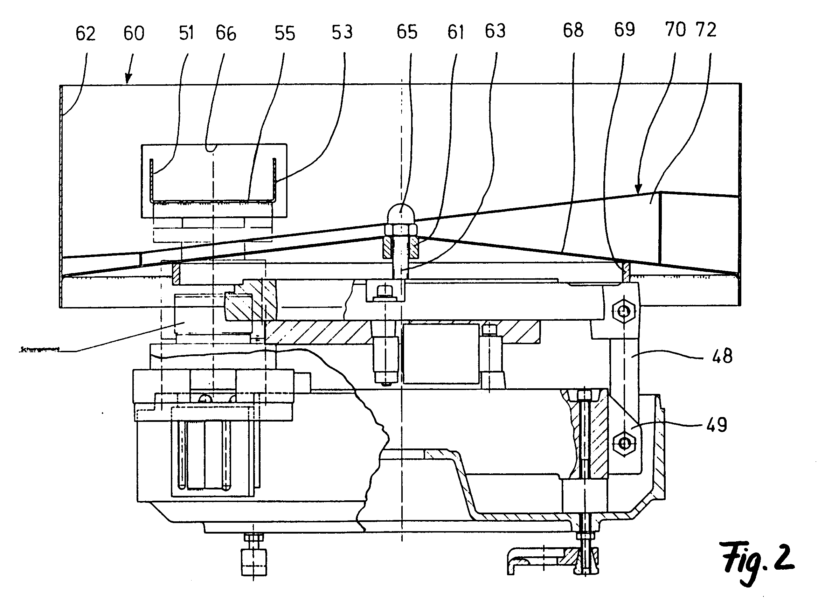

Der Kanal 50, der, wie Fig. 2 zeigt, einen U-förmigen und nach oben offenen Querschnitt besitzt, durchsetzt eine Seitenwand 62 einer im Ganzen mit 60 bezeichneten Schwingwanne, und zwar durch Öffnungen 64, 66, die zu diesem Zweck in die Seitenwand 62 geschnitten sind.

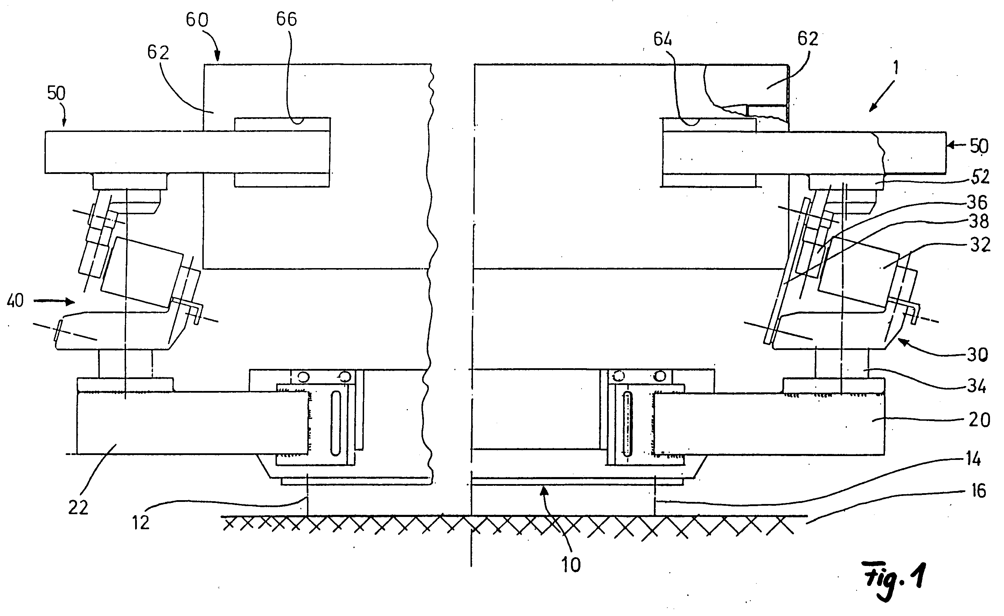

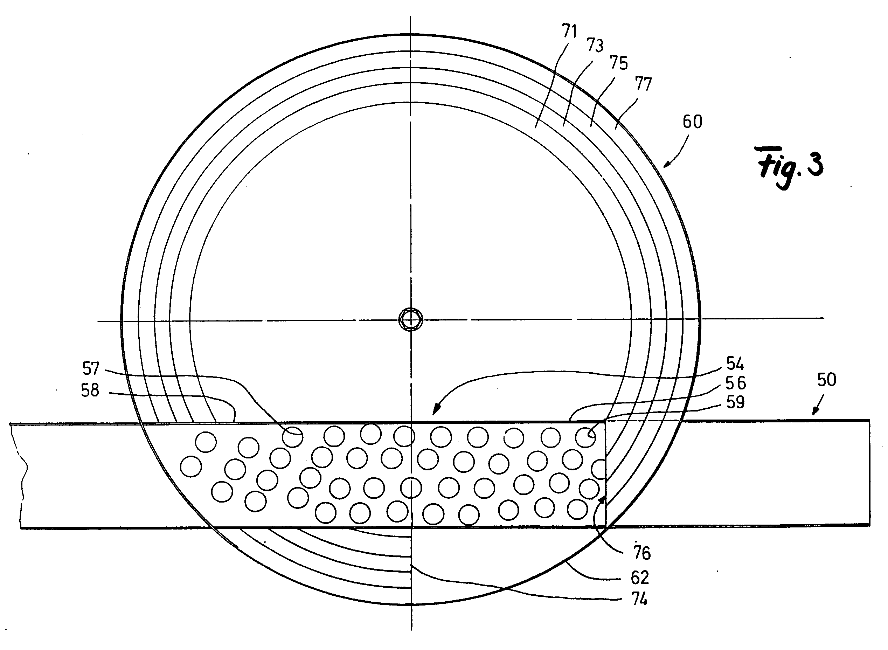

Wie Fig. 2 zeigt, besitzt der Kanal zwei gegenüberliegende, aufrecht stehende Seitenwangen 51, 53, die durch den Boden 55 des Kanals miteinander verbunden sind. Die Höhe der gleichhohen Seitenwangen 51, 53 ist so bemessen, daß beispielsweise Berliner Ballen, die längs des Kanals 50 gemäß den Darstellung in Figuren 1 und 3 von rechts nach links gefördert werden, aus dem Kanal 50 seitlich nicht herausfallen können. Wie Fig. 3 zeigt, ist der innerhalb der Wanne 60 befindliche Kanalabschnitt 54 im Boden 55 mit mehreren Sieblöchern 57 versehen, deren Dichte längs des linken Teils 58 des Kanalabschnitts 54 kleiner gewählt sein kann. In dem rechten Teil 56 des Kanalabschnitts 54 können die Siebbohrungen 59 von einem Blech unterlegt sein, auf welches noch eingegangen wird.

Die Schwingwanne 60 selbst hat die Form eines in Draufsicht runden Topfes, dessen Boden 68 von der Außenwand 62 ausgehend nach innen zur Mitte leicht keglig ansteigt. In der Mitte des Bodens ist die Wanne 60 mit einem Lager 61 um einen gestellfesten Zapfen 63 drehbar gelagert und auf diesem mittels einer Überwurfmutter 65 gesichert. Der Boden 68 der Schwingwanne 60 ist auf einen ringförmigen Rahmen 69 befestigt, an welchem die oberen Enden mehrerer Federpakete mehrerer Schwingsegmente verankert sind, von denen ein Federpaket mit 48 bezeichnet ist. Das untere Ende 49 jedes der Federpakete 48 ist an je einem beweglichen Anker je eines Schwingsegmentes befestigt, welches wie in der erwähnten Patentschrift 28 06 331 ausgeführt ist und in Konstruktion und Wirkungsweise den Schwingsegmenten 30, 40 gleicht. Die Gummipakete 48 sind in Umfangsrichtung der runden Schwingwanne 60 gleich beabstandet verteilt und gegen die Schwingwanne 60 schräg gestellt. Beispielsweise sind längs des Umfangs des Rahmens 69 drei Federpakete 48 verankert, so daß die Schwingwanne 60 von drei Schwingsegmenten synchron in ihrer Umfangsrichtung in Schwingungen versetzt wird. Dazu sind die Federpakete 48 gegen den zur Seitenwand 62 querliegenden Rahmen 69 unter jeweils gleichem Winkel schräggestellt. Wie insbesondere aus Fig. 2 hervorgeht, durchdringt der Kanal 50 die Schwingwanne 60 in einer Höhe zwischen Boden 68 und oberem Ende der Seitenwand, so daß unterhalb des Kanals 54 sich sowohl der Boden 69 wie auch eine noch zu erläuternde Rampe 70 erstrecken können.

Die Rampe 70 ist längs eines wesentlichen Umfangsabschnittes der Seitenwand 62 ausgebildet und steigt in Umfangsrichtung der Wanne bei der Darstellung gemäß Fig. 3 in Uhrzeigerrrichtung schwach an. Wie Fig. 3 zeigt, endet die Rampe oberhalb des Kanals 50 dicht hinter der Öffnung 64. Die Rampe weist auf ihrer Oberseite vier parallele Bahnen 71, 73, 75, 77 auf, die durch leichte, sich in Längsrichtung der Rampe erstreckende Erhebungen gegeneinander abgegrenzt und in Fig. 2 nicht dargestellt sind. Die Rampe 70 weist an ihrem von der Seitenwand entfernten Umfangsrand eine zur Seitenwand 62 parallele Wand 72 auf, die mit dem Boden 68 verbunden ist und sich längs der Rampe 70 erstreckt. Der Rampenanfang 74 geht glatt, d.h. ohne Stufe in den Boden 68 über.

Zum Betrieb der Bezuckerungsvorrichtung 1 wird auf den Boden 68 Feinzucker, wie er zum Bezuckern von Gebäckstücken üblicherweise verwendet wird, in beliebiger Menge aufgebracht und die elektromagnetischen Schwingantriebe sowohl für die Schwingwanne 60 wie auch für den Kanal 50 eingeschaltet. Durch die in Umfangsrichtung erfolgende Schwingbewegung der Schwingwanne 60 wird der Zucker in Umfangsrichtung, also bei der Darstellung nach Fig. 3 im Uhrzeigersinn gefördert und vermöge der nach außen abwärts vorhandenen Neigung des Bodens 68 in Richtung auf die Seitenwand 62 beziehungsweise die Wand 72 gedrängt. Der Zucker wird dann zunehmend auf der Rampe 70 hochsteigen und vermöge der Stärke der Schwingbewegungen der Schwingwanne 60 längs der Rampe 70 beziehungsweise längs deren Bahnen 71, 73, 75, 77 aufwärts wandern. Am Ende 76 der Rampe 70, das sich über dem Kanal 50 befindet, fällt der Zucker über die Kante der Rampe auf den Kanal 50 nieder und wird längs des Kanals 50 von rechts nach links gefördert und gelangt dabei durch die Sieblöcher 59 (für den Fall, daß diese nicht von einem Blech unterlegt sind) oder spätestens durch die Sieblöcher 57 wieder in die Schwingwanne 60 zurück.

Die zu bezuckernden Gebäckstücke, beispielsweise Berliner Ballen, werden auf den Anfangsabschnitt, also den in Fig. 3 rechten Teil des Kanals 50 außerhalb der Schwingwanne 60 aufgelegt, woraufhin die Gebäckstücke längs des Kanals 50 aufgrund des linearen Schwingantriebs von rechts nach links gefördert werden. Auf diesem Weg wandern die Gebäckstücke unter dem Ende 76 der Rampe 70 hindurch und werden dabei von oben mit dem herabfallenden Zucker berieselt. Die Breite des Kanals 50 kann so gewählt sein, daß jeweils nur eine Reihe von Gebäckstücken längs des Kanals 50 wandern kann, alternativ können auch zwei oder mehr Reihen von Gebäckstücken nebeneinander in dem Kanal 50 Platz finden und gelangen dann gemeinschaftlich unter dem Ende 76 hindurch.

Das Unterlegen einer Platte unter die Sieblöcher 59 hat die Wirkung, daß der vom Ende 76 herabgerieselte überschüssige Zucker in dem Abschnitt 56 des Kanals 50 verbleibt und in den Teil 58 weitergefördert wird, wobei die Gebäckstücke, beispielsweise Berliner Ballen durch den überschüssigen, noch im Abschnitt 56 vorhandenen Zucker auch von unten bezuckert werden. Die bezuckerten Gebäckstücke können dann am linken Ende des Kanals außerhalb der Schwingwanne 60 abgenommen oder ausgegeben werden und in einen Korb oder dergleichen Behälter fallen.

Die beschriebene Vorrichtung hat den Vorteil einer sehr kompakten Bauweise, die dennoch zwei unterschiedliche Schwingantriebe in sich vereinigt. Darüber hinaus geht kein überschüssiger Zucker verloren, wird insbesondere nicht in die Umgebung abgegeben, sondern fällt in die Schwingwanne 60 zurück.

## Patentansprüche

1. Vorrichtung zum Behandeln von insbesondere balligen Gebäckstücken mit einer ersten Fördereinrichtung (30, 40, 50) für die Gebäckstücke sowie mit einer zweiten Fördereinrichtung (48, 60, 70) für Zucker, welche zweite Fördereinrichtung eine unterhalb der ersten Fördereinrichtung (30, 40, 50) angeordnete Wanne (60) aufweist und sich von der Wanne (60) aufsteigend über die erste Fördereinrichtung (30, 40, 50) erstreckt, dadurch gekennzeichnet, daß die zweite Fördereinrichtung (48, 60, 70) eine aus der Wanne (60) aufsteigende Schwingrampe (70) aufweist.

2. Vorrichtung nach Anspruch 1, dadurch gekennzeichnet, daß die erste Fördereinrichtung einen langgestreckten Kanal (50) aufweist, dessen Boden längs des sich über der Wanne (60) erstreckenden Kanalabschnitts (54) wenigstens teilweise als Sieb ausgebildet ist.

3. Vorrichtung nach Anspruch 2, dadurch gekennzeichnet, daß der Kanal (50) mit einem ersten Schwingantrieb (30, 40) gekoppelt ist, der dem Kanal einen lineare Bewegung erteilt.

4. Vorrichtung nach einem der vorstehenden Ansprüche, dadurch gekennzeichnet, daß die Wanne (60) einen runden Querschnitt hat, die Rampe (70) an der Außenwand (62) der Wanne ausgebildet ist und der zweite Schwingantrieb (48) der Wanne eine etwa in ihre Umfangsrichtung gerichtete Bewegung erteilt.

5. Vorrichtung nach einem der vorstehenden Ansprüche, dadurch gekennzeichnet, daß der Kanal (50) die Seitenwand (62) der Wanne durchdringt.

6. Vorrichtung nach einem der vorstehenden Ansprüche, dadurch gekennzeichnet, daß der erste und der zweite Schwingantrieb auf einem gemeinsamen Gestell (10) befestigt sind.

7. Vorrichtung nach einem der vorstehenden Ansprüche, dadurch gekennzeichnet, daß der erste und der zweite Schwingantrieb je ein elektromagnetischer Schwingantrieb sind, die einzelne Schwingsegmente (30, 40, 50) aufweisen.

8. Vorrichtung nach einem der vorstehenden Ansprüche, dadurch gekennzeichnet, daß die Rampe (70) mehrere parallele Bahnen (71, 73, 75, 77) aufweist.

## Claims

1. Device for treating dough pieces with a first conveyor (30, 40, 50) for the dough pieces as well as with a second conveyor (48, 60, 70) for sugar, which second conveyor shows a trough (60) arranged under the first conveyor (30, 40, 50) and extends upwardly ascending from the trough (60) over the first conveyor (30, 40, 50), characterized in that the second conveyor (48, 60, 70) shows a vibrating ramp (70) ascending from the trough (60).

2. Device according to claim 1, characterized in that the first conveyor shows a long extending channel (50) the bottom of which has at least partly the shape of a sieve along the portion of channel (54) extending over the trough.

3. Device according to one of the preceding claims, characterized in that the channel (50) is coupled with a first vibration drive (30, 40) which imparts a linear movement to the channel.

4. Device according to one of the preceding claims, characterized in that the trough (60) has a round cross section, the ramp (70) is realized on the exterior wall (62) of the trough and the second vibration drive (48) imparts a movement to the trough in about the direction of its circumference.

5. Device according to one of the preceding claims, characterized in that the channel (50) penetrates into the side wall (62) of the trough.

6. Device according to one of the preceding claims, characterized in that the first and the second vibration drives are fitted on a common stand (10).

7. Device according to one of the preceding claims, characterized in that the first and the second vibration drive are respectively an electromagnetic vibration drive showing the different vibrating segments (30, 40, 50).

8. Device according to one of the preceding claims, characterized in that the ramp (70) shows several parallel paths (71, 73, 75, 77).

## Revendications

1. Appareil pour le traitement de morceaux de gâteaux en particulier de forme bombée avec un premier dispositif de manutention (30, 40, 50) pour les morceaux de gâteaux de même qu'avec un deuxième dispositif de manutention (48, 60, 70) pour le sucre, lequel deuxième dispositif de manutention présente une cuve (60) disposée au-dessous du premier dispositif de manutention et s'étend au-dessus du premier dispositif de manutention (30, 40, 50) en montant de la cuve (60), caractérisé en ce que le deuxième dispositif de manutention (48, 60, 70) présente une rampe de vibration (70) montant de la cuve (60).

2. Appareil selon la revendication 1, caractérisé en ce que le premier dispositif présente un canal étiré en longueur (50) dont le fond, le long de la portion de canal (54) s'étendant au dessus de la cuve (60), a, au moins en partie, la forme d'un tamis.

3. Appareil selon la revendication 2, caractérisé en ce que le canal (50) est accouplé à un premier entraînement de vibration (30, 40), qui communique au canal un mouvement linéaire.

4. Appareil selon l'une des revendications précédentes, caractérisé en ce que la cuve (60) présente un coupe transversale ronde, que la rampe (70) est conçue sur la paroi externe (62) de la cuve et que le deuxième entraînement de vibration (48) de la cuve communique un mouvement orienté à peu près dans le sens de la circonférence de celle-ci.

5. Appareil selon l'une des revendications précédentes, caractérisé en ce que le canal (50) pénètre dans la paroi latérale (62) de la cuve.

6. Appareil selon l'une des revendications précédentes, caractérisé en ce que les premier et deuxième entraînements de vibration sont fixés sur un bâti commun (10).

7. Appareil selon l'une des revendications précédentes, caractérisé en ce que les premier et deuxième entraînements sont chacun respectivement un entraînement de vibration électromagnétique présentant différents segments de vibration (30, 40, 50).

8. Appareil selon l'une des revendications précédentes, caractérisé en ce que la rampe (70) présente des voies parallèles (71, 73, 75, 77).
